# FASCICULE DE BREVET EUROPEEN

(11) **EP 4 194 828 B1**
(45) Date de publication et mention de la délivrance du brevet: **07.02.2024**
(21) Numéro de dépôt: 22201234.6
(22) Date de dépôt: 13.10.2022
(51) Int. Cl.: G01K 13/12

(54) **DISPOSITIF D ÉVALUATION DE LA TEMPÉRATURE D'UN CÂBLE DE CATÉNAIRE**
VORRICHTUNG ZUR TEMPERATURBEURTEILUNG EINES OBERLEITUNGSKABELS
DEVICE FOR ASSESSING THE TEMPERATURE OF A CATENARY WIRE

(30) Priorité: 07.12.2021 FR 2113086
(43) Date de publication de la demande: 14.06.2023
(73) Titulaire: 4NRJ, 41260 La Chaussée-Saint-Victor (FR)
(72) Inventeur: GASSELIN, Benoît, 41000 Blois (FR)
(74) Mandataire: Lequien, Philippe

(56) Documents cités:
- FR-A1- 3 071 783
- US-A1- 2016 124 449
- US-A1- 2020 348 188
- US-B2- 7 044 637

## Description

Le domaine de l'invention est celui de la conception et de la fabrication d'équipements de métrologie appliqués au ferroviaire.

Plus précisément l'invention concerne un dispositif permettant d'évaluer la température d'un câble d'une caténaire.

Dans le domaine de l'invention, il est connu de suspendre un ou plusieurs fils de contact à un câble porteur par l'intermédiaire d'une succession de câbles verticaux dénommés pendules, dont les longueurs sont adaptées à maintenir le fil de contact sensiblement horizontal. L'ensemble formé par le fil de contact, les pendules et le câble porteur est classiquement désigné par caténaire (ou ligne aérienne de contact).

Une caténaire peut par exemple mesurer jusqu'à 2 kilomètres de long.

Une caténaire est classiquement associée à des dispositifs de mise en tension, notamment des appareils tendeur à moufles, qui permettent de mettre en tension un câble de la caténaire et de le maintenir à une tension prédéterminée. Le bon fonctionnement de la caténaire implique en effet un maintien des câbles de la caténaire à une tension adéquate.

Le contrôle de la tension mécanique d'un câble de caténaire est ainsi impératif lors d'opérations d'entretien de la caténaire.

Un problème relatif aux câbles de caténaire réside dans leurs natures et la modification de leurs caractéristiques mécaniques selon la température.

Il est important de pouvoir connaître la température d'un câble tendu pour la corréler avec une tension mécanique relevée. Des abaques de contrôle des caténaires imposent en effet la vérification de ces deux paramètres.

Cependant, la mesure directe d'une température réelle d'un câble n'est pas possible, ou à tout le moins la technique pour effectuer une telle mesure n'est pas encore connue.

Les méthodes actuelles visent ainsi à évaluer cette température.

Par exemple, il peut être utilisé la température ambiante du lieu d'installation du câble de la caténaire.

Il a été constaté qu'en pratique des mesures de températures ambiantes sont réalisées par le biais de la température affichée sur des sites internet, sur le thermomètre d'un véhicule arrivant sur le lieu d'installation du câble de la caténaire, ou bien encore par un relevé de la température ambiante à proximité immédiate d'un poteau sur lequel le câble de la caténaire est couplé.

Ce type d'évaluation basique est aisé à réaliser mais n'est pas fiable.

Dans le domaine de l'invention, il est connu le dispositif décrit dans le document de brevet français publié sous le numéro FR3071783. Ce dispositif vise à renforcer la fiabilité d'une évaluation de la température d'un fil de contact d'une caténaire, au niveau d'un appareil tendeur à moufles. A cet effet, le dispositif comprend un tronçon de câble indépendant du fil de contact de la caténaire, ce tronçon indépendant étant positionné en hauteur et sa température étant spécifiquement mesurée par un capteur ad hoc.

Cette approche, bien qu'étant plus fiable que les évaluations basiques, n'est toutefois pas pleinement satisfaisante. D'autres exemples peuvent être retrouvés dans US7044637B2, US2016/124449A1 et US2020/348188A1.

En effet, la pratique démontre que seules les mesures de températures prises la nuit sont fiables. En journée, le capteur est soit positionné à l'ombre, soit positionné au soleil, tandis que la caténaire peut être exposé totalement ou partiellement au soleil, voir ne pas être du tout exposée au soleil.

L'invention a notamment pour objectif de palier les inconvénients de l'art antérieur.

Plus précisément, l'invention a pour objectif de proposer une solution permettant d'évaluer la température d'un câble de caténaire de manière plus fiable que l'art antérieur.

L'invention a encore pour objectif de proposer une telle solution qui soit simple d'utilisation et qui facilite, par voie de conséquence, le travail d'un agent de maintenance.

Ces objectifs, ainsi que d'autres qui apparaîtront par la suite, sont atteints grâce à l'invention qui a pour objet un système d'évaluation de la température d'un câble de caténaire, comprenant :
- un premier tronçon de câble, distinct d'un câble de caténaire;
- un premier capteur de température associé au premier tronçon pour mesurer sa température, dite première température ;
- une unité électronique couplée au premier capteur ;
caractérisé en ce qu'il comprend :
- un deuxième tronçon de câble, le deuxième tronçon de câble étant distinct d'un câble de caténaire, et inséré dans un carter d'ombrage, le premier tronçon étant sorti du carter d'ombrage et destiné à être directement exposé à un rayonnement solaire ;
- un deuxième capteur de température associé au deuxième tronçon pour mesurer sa température, dite deuxième température, l'unité électronique étant également couplée au deuxième capteur ;
et en ce que l'unité électronique comprend des moyens de calcul d'une température globale obtenue à partir d'une pondération des première température et deuxième température.

Grâce au système selon l'invention, il est possible d'obtenir une évaluation de la température d'un câble de caténaire qui est plus fiable que les méthodes et systèmes selon l'art antérieur.

En effet, grâce à l'invention, il est possible d'évaluer la température de la caténaire à partir de deux tronçons de câbles, similaires à celui de la caténaire dont la température doit être évaluée, qui ne sont pas tous les deux exposés à un rayonnement solaire.

Du fait qu'une caténaire, et notamment l'un de ses câbles, présentent une longueur particulièrement importante, alors il est courant que ledit câble de caténaire ne soit pas exposé à un rayonnement solaire identique sur toute sa longueur.

Par exemple, un câble de caténaire peut être situé pour moitié au sein d'un tunnel ou à l'ombre d'une forêt, et être ainsi protégé du rayonnement solaire et, pour sa seconde moitié, être exposé au soleil en étant sorti du tunnel.

Le système selon l'invention permet d'obtenir une évaluation d'une température globale à partir de deux tronçons de câbles dont le premier est destiné à être exposé directement à un rayonnement solaire et dont le deuxième est destiné à être protégé du rayonnement solaire au sein du carter d'ombrage.

De cette manière, la température globale qui est obtenue à partir d'une pondération des première température et deuxième température permet de prendre en compte le fait que la caténaire dont la température doit être évaluée comporte une ou plusieurs sections exposées au soleil et une ou plusieurs sections non exposées au soleil.

Le système selon l'invention permet ainsi d'obtenir une mesure particulièrement fiable en journée en outre de l'être également la nuit.

Préférentiellement, le carter d'ombrage est thermiquement isolé.

De cette manière, il est ainsi évité, ou à tout le moins limité, un réchauffement du deuxième tronçon de câble par le biais d'un échauffement du carter d'ombrage, et notamment par le biais d'une conduction thermique depuis une surface extérieure du carter d'ombrage exposée au rayonnement solaire jusqu'à une partie interne du carter d'ombrage.

Avantageusement, le carter d'ombrage est ventilé.

Grâce à une ventilation du carter d'ombrage, il est possible d'atténuer un potentiel échauffement du carter d'ombrage résultant d'une exposition au soleil de ce carter d'ombrage.

Selon un mode de réalisation préférentiel, le carter d'ombrage prend la forme d'un tube en matériau thermiquement isolant présentant au moins deux ouvertures de ventilation aptes à permettre la création d'un courant d'air dans le tube.

Le carter d'ombrage prend ainsi une forme particulièrement simple et aisée à mettre en oeuvre.

Selon une conception préférentielle, le carter d'ombrage est ventilé par effet venturi.

La ventilation du carter d'ombrage est particulièrement performante selon cette conception.

Selon une solution avantageuse, le système comprend un boitier électronique couplé au premier capteur de température et au deuxième capteur de température, le système comprenant des moyens d'échanges de données autorisant des échanges de données entre le boitier électronique et l'unité électronique, l'unité électronique disposant d'une interface homme-machine.

Grâce à cette solution, l'unité électronique permet à un agent d'intervenir à distance pour récupérer les données et obtenir la température globale évaluée du câble dont l'évaluation est recherchée.

L'unité électronique peut par exemple correspondre à une tablette électronique, à un téléphone connecté, ou encore à un ordinateur.

Avantageusement, l'unité électronique comprend des moyens de configuration d'un facteur de pondération.

De cette façon, il est possible par le biais de l'unité électronique d'ajuster le facteur de pondération qui doit être utilisé pour déterminer la température globale évaluée.

Par exemple, dans le cas d'un chantier où un agent doit effectuer une opération sur un câble d'une longueur donnée, alors il lui suffit d'évaluer visuellement la proportion du câble qui est exposée au soleil et la proportion du câble qui est protégée du soleil. L'agent doit ensuite renseigner dans l'unité électronique par l'interface homme-machine le facteur de pondération qui doit être mis en oeuvre par le système. Ceci permet d'ajuster plus précisément les paramètres du système pour améliorer sa fiabilité.

Selon une variante de conception, le système comprend une pluralité de boitiers électroniques couplés chacun à un premier capteur de température et à un deuxième capteur de température distincts, chaque boitier électronique comprenant un identifiant numérique unique,
et en ce qu'il comprend un serveur distant comprenant :
- des moyens de collecte des températures globales calculés par les moyens de calcul, et des identifiants numériques uniques des boitiers électroniques ;
- une base de données répertoriant les températures globales et les identifiants numériques uniques associés aux températures globales.

Grâce à cette variante de conception, il est possible, par le biais d'un serveur distant, de contrôler les températures globales d'une pluralité de câbles de caténaire.

Ceci est particulièrement avantageux du fait qu'il est ainsi possible de réaliser une évaluation fiable à distance des températures globales d'une pluralité de câbles.

Selon une caractéristique avantageuse, l'unité électronique comprend des moyens de paramétrage d'un diamètre de câble de caténaire, et des moyens de compensation d'une différence de diamètre entre ledit diamètre de câble de caténaire et un diamètre du premier tronçon de câble et du deuxième tronçon de câble.

Les câbles de caténaire peuvent présenter plusieurs diamètres.

Grâce aux moyens de paramétrage du diamètre de câble de caténaire, il est possible d'utiliser des tronçons de câble d'un diamètre prédéterminé au sein du système et de n'avoir qu'à renseigner le diamètre du câble dont la température doit être évaluée pour que le système compense la différence de diamètre si besoin et évalue de manière plus fiable la température globale du câble dont la température doit être évaluée.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés :
- la figure 1 est une représentation schématique d'un système d'évaluation de la température d'un câble de caténaire, selon l'invention ;
- la figure 2 est une représentation schématique d'une partie du système d'évaluation de la température d'un câble, selon l'invention, illustrant plus spécifiquement un premier tronçon de câble, un carter d'ombrage, et un boîtier électronique associé au premier tronçon et au carter d'ombrage ;
- la figure 3 est une représentation schématique d'un carter d'ombrage selon une coupe longitudinale médiane, illustrant la présence d'un deuxième tronçon de câble logé au sein du carter d'ombrage.

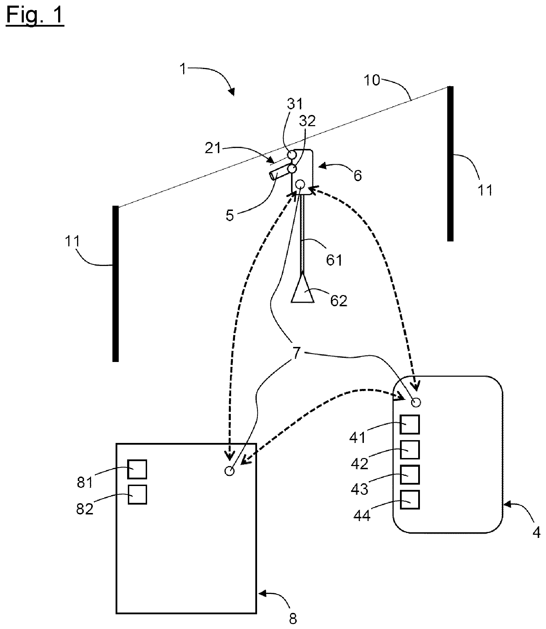

En référence à la figure 1, un système 1 d'évaluation de la température d'un câble 10 de caténaire est représenté.

Un câble 10 de caténaire est représenté tendu entre les extrémités supérieures de deux poteaux 11.

Selon la présente représentation, le câble 10 est seulement tendu entre les poteaux 11 et il n'y a pas de système de compensation de tension ajustant la tension du câble 10.

Le système 1 peut également être utilisé sur une caténaire dont le câble 10 a sa tension ajustée par un tel système de compensation de la tension tel qu'un appareil tendeur à moufle.

En référence aux figures 1 à 3, le système 1 comprend :
- un premier tronçon 21 de câble ;
- un deuxième tronçon 22 de câble ;
- un premier capteur 31 de température ;
- un deuxième capteur 32 de température ;
- une unité électronique 4 couplée au premier capteur 31 et au deuxième capteur 32.

Le premier tronçon 21 de câble et le deuxième tronçon 22 de câble sont tous les deux distincts du câble 10 de caténaire dont la température doit être évaluée. En d'autres termes, le premier tronçon 21 de câble et le deuxième tronçon de câble ne font pas partie du câble 10. Le premier tronçon 21 est ainsi distinct du deuxième tronçon 22.

Le premier capteur 31 est plus spécifiquement associé au premier tronçon 21 pour mesurer sa température. La température du premier tronçon 21 de câble est ci-après nommée « première température ».

Le deuxième capteur 32 est quant à lui associé au deuxième tronçon 22 de câble pour mesurer sa température. La température du deuxième tronçon 22 de câble est ci-après nommée « deuxième température ».

Ce premier capteur 31 et ce deuxième capteur 32 comportent par exemple chacun une sonde de température directement en contact avec les tronçons de câble 21, 22. Par exemple, la sonde peut être insérée jusqu'au coeur de chaque tronçon de câble.

Tel que cela est détaillé par la suite, l'unité électronique 4 est conçue pour obtenir une température globale à l'aide de la première température et de la deuxième température. Cette température globale correspond à l'évaluation de la température du câble 10 de caténaire à évaluer.

Selon le principe de l'invention, le système 1 comprend également un carter 5 d'ombrage.

Ce carter d'ombrage 5 est conçu pour protéger le deuxième tronçon 22 de câble. En d'autres termes, le carter d'ombrage 5 est conçu pour éviter qu'un rayonnement lumineux, notamment solaire, n'atteigne le deuxième tronçon 22.

Le deuxième tronçon 22 de câble est logé dans le carter d'ombrage 5. En d'autres termes, le deuxième tronçon 22 est inséré dans le carter d'ombrage 5.

Plus précisément, et tel que cela est illustré par les figures, le carter d'ombrage 5 comprend une cavité 500. Le deuxième tronçon 22 de câble est alors logé à l'intérieur de la cavité 500 du carter 5 d'ombrage.

En d'autres termes, le deuxième tronçon 22 est inséré dans le carter 5 d'ombrage et de cette manière, le deuxième tronçon 22 est protégé d'un rayonnement solaire par le carter 5 d'ombrage.

Le premier tronçon 21, quant à lui, est sorti du carter 5 d'ombrage de manière à pouvoir être directement exposé à un rayonnement solaire. En d'autres termes, le système 1 est conçu pour que le premier tronçon 21 soit exposé à un rayonnement solaire si le lieu d'installation du système 1 reçoit un rayonnement solaire.

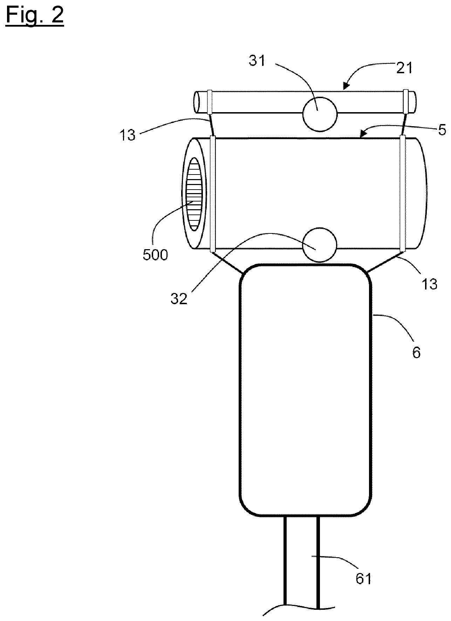

Plus spécifiquement en référence à la figure 2, le système 1 comprend des supports 13 permettant de positionner le premier tronçon 21 par rapport au carter 5 d'ombrage. Selon le présent mode de réalisation le premier tronçon 21 est positionné au-dessus du carter 5 d'ombrage.

Le système 1 comprend également un boîtier électronique 6 qui est couplé au premier capteur 31 de température et au deuxième capteur 32 de température. Tel que cela est illustré par la figure 1, le système 1 comprend également :
- un mât 61 ;
- un socle 62.

Le socle 62 est couplé au mât pour que ce dernier s'étende en hauteur, et le boîtier électronique 6 est porté par le mât 61 à son extrémité supérieure, opposée au socle 62.

Les supports 13 illustrés par la figure 2 permettent alors de maintenir au-dessus du boîtier électronique 6 le carter 5 d'ombrage et le premier tronçon 21 de câble.

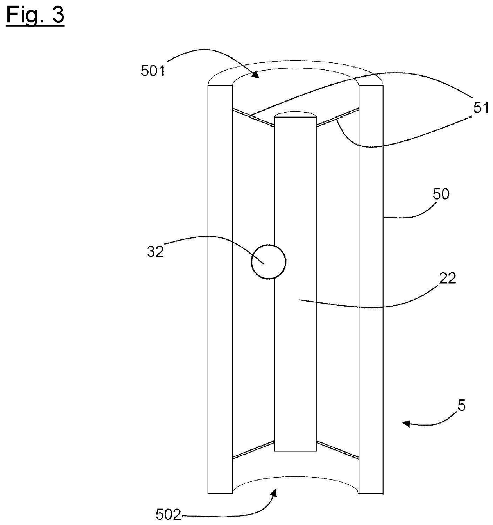

Ainsi, selon ce présent mode de réalisation, le premier tronçon 21 est tenu au-dessus du carter 5 d'ombrage et au-dessus du boîtier électronique 6 et peut être exposé pleinement à un rayonnement solaire, tandis que le deuxième tronçon (illustré sur la figure 3) est protégé du rayonnement solaire par le carter 5 d'ombrage.

Les supports 13 peuvent par exemple prendre la forme d'un bâti composé de montants et de cerclages.

En référence aux figures 2 et 3, le carter 5 d'ombrage est un tube 50.

Plus spécifiquement, le tube 50 est en matériaux thermiquement isolant.

Le carter 5 d'ombrage est ainsi thermiquement isolé.

Selon le présent mode de réalisation, le carter 5 d'ombrage est également ventilé.

A cet effet, le tube 50 présente au moins deux ouvertures 501, 502 de ventilation.

Ces ouvertures 501, 502 de ventilation permettent la circulation d'un courant d'air dans le tube 50 de manière à assurer le refroidissement du deuxième tronçon 22 de câble.

Tel que cela est illustré par la figure 3, le carter 5 d'ombrage peut comporter des bras 501 permettant de maintenir le deuxième tronçon 22 tendu et centré à l'intérieur du tube 50.

Avantageusement, le carter 5 d'ombrage est ventilé par effet Venturi et les ouvertures 501, 502 sont alors dessinées de manière à créer un effet Venturi. Notamment, le carter 5 d'ombrage peut comprendre une section interne rétrécie par rapport à la section des ouvertures 501, 502 pour augmenter la vitesse d'écoulement d'un flux d'air au sein de la section interne (non illustré par les figures).

Selon le présent mode de réalisation et en référence à la figure 1, le système 1 comprend des moyens d'échange de données 7.

Ces moyens d'échange de données 7 autorisent des échanges de données entre le boîtier électronique 6 et l'unité électronique 4. De cette manière l'unité électronique 4 est couplée au premier capteur 31 et au deuxième capteur 32 tel qu'évoqué précédemment.

Le système 1 comprend également un serveur distant 8.

Les moyens d'échange de données 7 autorisent également un échange de données entre le boîtier électronique 6 et le serveur distant 8, ainsi qu'entre l'unité électronique 4 et le serveur distant 8.

Ces moyens d'échange de données 7 prennent par exemple la forme de puces de télécommunication mettant en oeuvre des normes et des protocoles déchanges sans fil.

Il est également envisageable que l'échange de données se réalise de manière filaire.

Selon le principe de l'invention, cette unité électronique 4 comprend des moyens de calcul 41 de la température globale qui est obtenue à partir d'une pondération des premières températures et deuxièmes températures. L'unité électronique 4 est ainsi conçue pour calculer une température globale à partir d'une pondération des températures et températures mesurées par les capteurs 31, 32.

Cette pondération correspond plus précisément à un facteur de pondération qui doit être appliqué à chacune des températures mesurées par les capteurs 31, 32 pour obtenir la température globale.

Selon un exemple pratique, dans le cas où le câble à évaluer est exposé pour moitié à un rayonnement solaire et que l'autre partie n'est pas exposée à un rayonnement solaire, alors un facteur de pondération de 50 % peut être appliqué à chacune de la première température et de la deuxième température pour obtenir la température du câble 10 de caténaire à évaluer.

Selon le présent mode de réalisation, l'unité électronique 4 dispose d'une interface homme-machine 40.

L'unité électronique 4 comprend encore :
- des moyens de configuration 42 d'un facteur de pondération ;
- des moyens de paramétrage 43 d'un diamètre de câble 10 de caténaire ;
- des moyens de compensation 44 d'une différence de diamètre entre ledit diamètre de câble 10 de caténaire et un diamètre du premier tronçon 21 de câble et du deuxième tronçon 22 de câble.

Cette unité électronique 4 prend, par exemple, la forme d'un ordinateur, et notamment d'un ordinateur portable.

L'unité électronique 4 peut encore plus avantageusement prendre la forme d'une tablette électronique ou d'un ordiphone, permettant de la sorte à un agent de réaliser une intervention sur site rapide et aisée à mettre en oeuvre pour obtenir la température globale du câble 10 de caténaire à évaluer.

L'interface homme-machine 40 permet à l'agent de maintenance de consulter et de renseigner les informations dans l'unité électronique 4. Cette interface homme-machine 40 est utilisée notamment pour renseigner un facteur de pondération par le biais des moyens de configuration 42. Ces moyens de configuration 42 permettent alors de définir la manière dont doit être pondérée la première température et la deuxième température par les moyens de calcul 41 de la température globale.

L'interface homme-machine 40 de l'unité électronique 4 permet également à un agent de maintenance de renseigner le diamètre de câble 10 de caténaire à évaluer dans les moyens de paramétrage 43.

De cette manière, les moyens de compensation 44 permettent de déterminer s'il existe une différence de diamètre entre le ou les diamètres préremplis du premier tronçon 21 de câble et du deuxième tronçon 22 de câble avec le diamètre renseigné du câble 10 de caténaire dont la température est évaluée.

Une compensation de température globale peut alors être appliquée à la pondération réalisée par les moyens de calcul 41.

Le serveur distant 8 permet de centraliser au moins une températures globales calculée et préférentiellement une pluralité de températures globales.

A cet effet, le système 1 comprend une pluralité de boîtiers électroniques 6 qui sont chacun couplés à un premier capteur 31 de température et à un deuxième capteur 32 de température distincts les uns des autres.

Par exemple, les boîtiers électroniques 6 peuvent être chacun installés dans des chantiers distants les uns des autres.

Les boîtiers électroniques 6 sont chacun pourvus d'un identifiant numérique unique.

Le serveur distant 8 comprend alors des moyens de collecte 81 des températures globales calculées par les moyens de calcul 41 des unités électroniques 4, ainsi que des identifiants numériques uniques des boîtiers électroniques 6 desquels sont issus les températures ayant permis le calcul des températures globales.

Ces moyens de collecte 81 utilisent alors les moyens d'échange de données 7 précédemment décrits pour pouvoir recevoir des données de chaque boîtier électronique 6 et des unités électroniques 4.

Selon un autre mode de réalisation envisageable, le serveur distant 8 peut former une unité électronique 4 et dans ce cas il s'agit du serveur distant 8 qui réalise les calculs des températures globales.

Le serveur distant 8 comprend également une base de données 82 qui permet de répertorier les températures globales collectées par les moyens de collecte 81, et qui répertorie également les identifiants numériques uniques des boîtiers électroniques 6 qui sont associés aux températures globales collectées.

Le système 1 selon l'invention est particulièrement simple à mettre en oeuvre, tout en permettant d'obtenir une température globale dont l'évaluation peut être considérée comme étant plus fiable que les solutions selon l'art antérieur.

Selon un exemple d'application du système 1 représenté sur la figure 1, ce système 1 peut être utilisé de manière ponctuelle sur un chantier.

Dans le cas d'un chantier où la tension du câble tendu entre deux poteaux doit être contrôlée, alors un agent a recours à des abaques faisant correspondre à un diamètre de câble, une température et une gamme de tension à respecter.

Pour connaître l'évaluation de la température du câble de caténaire, l'agent positionne le boîtier électronique 6 à proximité immédiate du câble 10 de caténaire.

Après une durée suffisante pour que le premier tronçon 21 de câble et le deuxième tronçon 22 de câble soient arrivés à des températures susceptibles d'être représentatives, alors l'agent peut utiliser l'unité électronique 4.

Par le biais de l'interface homme-machine 40, l'agent peut renseigner le facteur de pondération en évaluant la proportion de câble 10 qui est exposée au soleil et la proportion de câble 10 qui n'est pas exposée au soleil, ainsi que le diamètre du câble 10 de caténaire à évaluer.

Grâce à ces informations, les moyens de calcul 41 déterminent une température globale en pondérant la première température mesurée par le premier capteur 31 et la deuxième température mesurée par le deuxième capteur 32, respectivement sur le premier tronçon 21 de câble et sur le deuxième tronçon 22 de câble.

A cette température globale calculée par les moyens de calcul 41, une compensation peut être appliquée dans le cas où une différence de diamètre de câble est identifiée par le système 1 à l'aide des moyens de compensation 44.

La compensation résulte par exemple d'une table de compensation obtenue expérimentalement au préalable.

Par la suite, l'agent obtient, par le biais de l'interface homme-machine 40 de son unité électronique 4, la température globale évaluée.

Le système 1 selon l'invention est ainsi particulièrement simple à mettre en oeuvre tout en permettant d'obtenir une évaluation relativement fiable de la température du câble 10 de caténaire.

## Revendications

1. Système (1) d'évaluation de la température d'un câble (10) de caténaire, comprenant :
- un premier tronçon (21) de câble, distinct d'un câble (10) de caténaire ;
- un premier capteur (31) de température associé au premier tronçon (21) pour mesurer sa température, dite première température ;
- une unité électronique (4) couplée au premier capteur (31) ;
**caractérisé en ce qu'**il comprend :
- un deuxième tronçon (22) de câble, le deuxième tronçon (22) de câble étant distinct d'un câble (10) de caténaire et distinct du premier tronçon, et inséré dans un carter (5) d'ombrage, le premier tronçon (21) étant sorti du carter (5) d'ombrage et destiné à être directement exposé à un rayonnement solaire ;
- un deuxième capteur (32) de température associé au deuxième tronçon (22) pour mesurer sa température, dite deuxième température, l'unité électronique (4) étant également couplée au deuxième capteur (32) ;
et **en ce que** l'unité électronique (4) comprend des moyens de calcul (41) d'une température globale obtenue à partir d'une pondération des première température et deuxième température.

2. Système (1) selon la revendication précédente, **caractérisé en ce que** le carter (5) d'ombrage est thermiquement isolé.

3. Système (1) selon l'une quelconque des revendications précédentes, **caractérisé en ce que** le carter (5) d'ombrage est ventilé.

4. Système (1) selon les revendications 2 et 3, **caractérisé en ce que** le carter (5) d'ombrage prend la forme d'un tube (50) en matériau thermiquement isolant présentant au moins deux ouvertures (501, 502) de ventilation aptes à permettre la création d'un courant d'air dans le tube (50).

5. Système (1) selon l'une quelconque des revendications 3 et 4, **caractérisé en ce que** le carter (5) d'ombrage est ventilé par effet venturi.

6. Système (1) selon l'une quelconque des revendications précédentes, **caractérisé en ce qu'**il comprend un boitier électronique (6) couplé au premier capteur (31) de température et au deuxième capteur (32) de température, le système (1) comprenant des moyens d'échanges de données (7) autorisant des échanges de données entre le boitier électronique (6) et l'unité électronique (4), l'unité électronique (4) disposant d'une interface homme-machine (40).

7. Système (1) selon la revendication précédente, **caractérisé en ce que** l'unité électronique (4) comprend des moyens de configuration (42) d'un facteur de pondération.

8. Système (1) selon l'une quelconque des revendications 6 et 7, **caractérisé en ce qu'**il comprend une pluralité de boitiers électroniques (6) couplés chacun à un premier capteur (31) de température et à un deuxième capteur (32) de température distincts, chaque boitier électronique (6) comprenant un identifiant numérique unique,
et **en ce qu'**il comprend un serveur distant (8) comprenant :
- des moyens de collecte (81) des températures globales calculés par les moyens de calcul (41), et des identifiants numériques uniques des boitiers électroniques (6) ;
- une base de données (82) répertoriant les températures globales et les identifiants numériques uniques associés aux températures globales.

9. Système (1) selon l'une quelconque des revendications précédentes, **caractérisé en ce que** l'unité électronique (4) comprend des moyens de paramétrage (43) d'un diamètre de câble (10) de caténaire, et des moyens de compensation (44) d'une différence de diamètre entre ledit diamètre de câble (10) de caténaire et un diamètre du premier tronçon (21) de câble et du deuxième tronçon (22) de câble.

## Patentansprüche

1. System (1) zur Bewertung der Temperatur eines Oberleitungskabels (10), umfassend:
- einen ersten Kabelabschnitt (21), der von einem Oberleitungskabel (10) verschieden ist;
- einen ersten Temperatursensor (31), der dem ersten Abschnitt (21) zugeordnet ist, um dessen Temperatur, die sogenannte erste Temperatur, zu messen;
- eine elektronische Einheit (4), die mit dem ersten Sensor (31) gekoppelt ist;
**dadurch gekennzeichnet, dass** es Folgendes umfasst:
- einen zweiten Kabelabschnitt (22), wobei der zweite Kabelabschnitt (22) von einem Oberleitungskabel (10) verschieden ist und in eine Verschattungsummantelung (5) eingesetzt ist, wobei der erste Abschnitt (21) aus der Verschattungsummantelung (5) herausragt und dazu bestimmt ist, direkt der Sonneneinstrahlung ausgesetzt zu werden;
- einen zweiten Temperatursensor (32), der dem zweiten Abschnitt (22) zugeordnet ist, um dessen Temperatur, die sogenannte zweite Temperatur, zu messen, wobei die elektronische Einheit (4) ebenfalls mit dem zweiten Sensor (32) gekoppelt ist;
und dadurch, dass die elektronische Einheit (4) ein Berechnungsmittel (41) für eine Gesamttemperatur umfasst, die aus einer Gewichtung der ersten Temperatur und der zweiten Temperatur erhalten wird.

2. System (1) nach dem vorhergehenden Anspruch, **dadurch gekennzeichnet, dass** die Verschattungsummantelung (5) wärmeisoliert ist.

3. System (1) nach einem der vorhergehenden Ansprüche, **dadurch gekennzeichnet, dass** die Verschattungsummantelung (5) belüftet ist.

4. System (1) nach den Ansprüchen 2 und 3, **dadurch gekennzeichnet, dass** die Verschattungsummantelung (5) die Form eines Rohrs (50) aus thermisch isolierendem Material hat, das mindestens zwei Belüftungsöffnungen (501, 502) aufweist, die dazu ausgebildet sind, das Erzeugen eines Luftstroms im Rohr (50) zu ermöglichen.

5. System (1) nach einem der Ansprüche 3 und 4, **dadurch gekennzeichnet, dass** die Verschattungsummantelung (5) durch den Venturi-Effekt belüftet wird.

6. System (1) nach einem der vorhergehenden Ansprüche, **dadurch gekennzeichnet, dass** es ein elektronisches Gehäuse (6) umfasst, die mit dem ersten Temperatursensor (31) und dem zweiten Temperatursensor (32) gekoppelt ist, wobei das System (1) ein Datenaustauschmittel (7) umfasst, das den Datenaustausch zwischen dem elektronischen Gehäuse (6) und der elektronischen Einheit (4) gestattet, wobei die elektronische Einheit (4) über eine Mensch-Maschine-Schnittstelle (40) verfügt.

7. System (1) nach dem vorhergehenden Anspruch, **dadurch gekennzeichnet, dass** die elektronische Einheit (4) ein Konfigurationsmittel (42) für einen Gewichtungsfaktors umfasst.

8. System (1) nach einem der Ansprüche 6 und 7, **dadurch gekennzeichnet, dass** es eine Vielzahl von elektronischen Gehäusen (6) umfasst, die jeweils mit einem separaten ersten Temperatursensor (31) und einem separaten zweiten Temperatursensor (32) gekoppelt sind, wobei jedes elektronische Gehäuse (6) eine einzigartige numerische Kennung umfasst,
und dadurch, dass es einen Remote-Server (8) umfasst, der Folgendes umfasst:
- ein Sammelmittel (81) für die Gesamttemperaturen, die von dem Berechnungsmittel (41) berechnet werden, und eindeutige numerische Kennungen der elektronischen Gehäuse (6);
- eine Datenbank (82), die Gesamttemperaturen und eindeutige numerische Kennungen, die den Gesamttemperaturen zugeordnet sind, auflistet.

9. System (1) nach einem der vorhergehenden Ansprüche, **dadurch gekennzeichnet, dass** die elektronische Einheit (4) ein Parametrierungsmittel (43) für einen Durchmesser des Oberleitungskabels (10) und ein Kompensationsmittel (44) für einen Durchmesserunterschied zwischen dem Durchmesser des Oberleitungskabels (10) und einem Durchmesser des ersten Kabelabschnitts (21) und des zweiten Kabelabschnitts (22) umfasst.

## Claims

1. A system (1) for assessing the temperature of a catenary cable (10), comprising:
- a first cable section (21), distinct from a catenary cable (10);
- a first temperature sensor (31) associated with the first section (21) for measuring its temperature, so-called the first temperature;
- an electronic unit (4) coupled to the first sensor (31);
**characterised in that** it comprises:
- a second cable section (22), the second cable section (22) being distinct from a catenary cable (10) and distinct from the first section, and inserted into a shading shield (5), the first section (21) extending from the shading shield (5) and intended to be directly exposed to a solar radiation;
- a second temperature sensor (32) associated with the second section (22) for measuring its temperature, so-called the second temperature, the electronic unit (4) also being coupled to the second sensor (32);
and **in that** the electronic unit (4) comprises means (41) for calculating a global temperature obtained based on a weighting of the first temperature and the second temperature.

2. The system (1) according to the preceding claim, **characterised in that** the shading shield (5) is heatinsulated.

3. The system (1) according to any one of the preceding claims, **characterised in that** the shading shield (5) is ventilated.

4. The system (1) according to claims 2 and 3, **characterised in that** the shading shield (5) is in the form of a tube (50) made of heat-insulating material having at least two ventilation openings (501, 502) able to enable the creation of an air stream in the tube (50).

5. The system (1) according to any one of claims 3 and 4, **characterised in that** the shading shield (5) is ventilated by Venturi effect.

6. The system (1) according to any one of the preceding claims, **characterised in that** it comprises an electronic box (6) coupled to the first temperature sensor (31) and to the second temperature sensor (32), the system (1) comprising data exchange means (7) enabling data exchanges between the electronic box (6) and the electronic unit (4), the electronic unit (4) being provided with a human-machine interface (40).

7. The system (1) according to the preceding claim, **characterised in that** the electronic unit (4) comprises means (42) for configuring a weighting factor.

8. The system (1) according to any one of claims 6 and 7, **characterised in that** it comprises a plurality of electronic boxes (6) each coupled to a first temperature sensor (31) and to a second temperature sensor (32) distinct from each other, each electronic box (6) comprising a unique digital identifier,
and **in that** it comprises a remote server (8) comprising:
- means (81) for collecting the global temperatures calculated by the calculation means (41), and the unique digital identifiers of the electronic boxes (6);
- a database (82) listing the global temperatures and the unique digital identifiers associated with the global temperatures.

9. The system (1) according to any one of the preceding claims, **characterised in that** the electronic unit (4) comprises means (43) for setting a catenary cable diameter (10), and means (44) for compensating for a diameter difference between said catenary cable diameter (10) and a diameter of the first cable section (21) and of the second cable section (22).
